# DEMANDE DE BREVET EUROPEEN

(11) **EP 1 675 233 A1**
(43) Date de publication de la demande: **28.06.2006**
(21) Numéro de dépôt: 05292578.1
(22) Date de dépôt: 06.12.2005
(51) Int. Cl.: H02G 3/08

(54) **Support d'appareillage électrique à moyens d'association dans tous les sens à un autre support du même type**

(30) Priorité: 23.12.2004 FR 0413827
(71) Demandeur: LEGRAND, 87000 Limoges (FR); LEGRAND SNC, 87000 Limoges (FR)
(72) Inventeur: Robert, Michel, 87000 Limoges (FR); Roth Jean-Paul, 87380 Saint Germain les Belles (FR); Cliquennois, Patrice, 23800 Lafat (FR); Favalessa, Thierry, 87240 Ambazac (FR)
(74) Mandataire: Orsini, Fabienne

(57) **Abrégé**

L'invention concerne un support (100) d'appareillage électrique comprenant un cadre plat de forme générale rectangulaire avec sur chacun de deux côtés opposés de son bord périphérique extérieur des moyens d'assemblage (107) adaptés à solidariser ledit support à un autre support du même type pour former avec cet autre support une seule pièce rigide.

Selon l'invention, il comporte sur chacun des deux autres côtés opposés du bord périphérique du cadre des moyens d'assemblage identiques auxdits moyens d'assemblage portés par lesdits premiers côtés opposés.

## Description

### DOMAINE TECHNIQUE AUQUEL SE RAPPORTE L'INVENTION

La présente invention concerne de manière générale les supports mis en oeuvre pour rapporter un quelconque mécanisme d'appareillage, tel que par exemple un mécanisme d'interrupteur ou de prise de courant, dans une boîte à encastrer dans une paroi quelconque ou dans un boîtier à rapporter en saillie d'une telle paroi.

Elle concerne en particulier un support d'appareillage électrique comprenant un cadre plat de forme générale rectangulaire avec sur chacun de deux côtés opposés de son bord périphérique extérieur des moyens d'assemblage adaptés à solidariser ledit support à un autre support du même type pour former avec cet autre support une seule pièce rigide.

### ARRIERE-PLAN TECHNOLOGIQUE

On connaît des documents FR 2 727 260 et FR 2 549 168 des supports qui comprennent sur une paire de côtés parallèles de leur bord périphérique externe des premiers moyens d'assemblage et sur l'autre paire de côtés parallèles de leur bord périphérique externe des deuxièmes moyens d'assemblage différents des premiers moyens d'assemblage si bien que ces supports peuvent seulement être associés horizontalement ou verticalement à un autre support du même type. Le sens ou la direction d'association dépend de l'endroit où sont placés lesdits moyens d'assemblage sur les supports.

Ainsi, si l'on fait pivoter un de ces supports d'un quart de tour dans le plan de sa façade on ne peut plus l'associer à un autre support du même type qui n'a pas lui-même pivoté d'un quart de tour.

La différence entre les premiers et les deuxièmes moyens d'assemblage provient soit de l'écartement des éléments d'assemblage mâle et femelle (voir FR 2 727 260) soit de l'emplacement du couple d'éléments mâle et femelle sur le côté correspondant du bord périphérique extérieur (voir FR 2 549 168).

En outre, le document DE 19 67 775 décrit un support d'appareillage dont les quatre côtés extérieurs sont pourvus de moyens identiques d'association qui permettent seulement un positionnement relatif de deux supports du même type entre eux, la solidarisation de ces supports n'intervenant que lors de leur montage sur la boîte d'encastrement. Au surplus, ces moyens d'association sont jumelés à des moyens de montage orientés par vis des socles de mécanismes sur les supports.

### OBJET DE L'INVENTION

Par rapport à l'état de la technique précité la présente invention propose un nouveau support d'appareillage électrique qui peut se solidariser dans tous les sens à un autre support du même type.

Plus particulièrement, l'invention propose un support tel que défini en introduction qui comporte sur chacun des deux autres côtés opposés du bord périphérique du cadre des moyens d'assemblage identiques auxdits moyens d'assemblage portés par lesdits premiers côtés opposés.

Ainsi selon l'invention, il est prévu sur les côtés extérieurs du support des moyens d'assemblage qui permettent sa solidarisation à un autre support du même type pour former une seule pièce à rapporter sur la boîte d'encastrement.

D'autres caractéristiques avantageuses et non limitatives du support selon l'invention sont les suivantes :
- lesdits moyens d'assemblage prévu sur chaque côté du bord périphérique extérieur comprennent en saillie de ce dernier un élément mâle et un élément femelle ;
- lesdits moyens d'assemblage viennent de formation avec ledit support ;
- lesdits moyens d'assemblage prévu sur chaque côté du bord périphérique extérieur comprennent un ergot et, à distance de cet ergot, en correspondance avec celui-ci, une encoche de contour complémentaire ;
- il comporte dans chacune de ses quatre branches des moyens d'assujettissement propres à permettre sa fixation à une boîte ; et
- lesdits moyens d'assujettissement comprennent un perçage pour le passage d'une vis de fixation.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un support d'appareillage selon l'invention;
- la figure 2 est une vue schématique de face de quatre supports du type de celui de la figure 1 associés en carré;
- les figures 3A et 3B sont des vues schématiques en perspective du support de la figure 1 dont une portion détachable est détachée ;
- la figure 4 est une vue schématique en perspective de deux supports de la figure 3B associés,
- la figure 5 est une vue schématique en perspective d'un socle 2 modules,
- la figure 6 est une vue de face du socle de la figure 5 monté dans le support de la figure 1 ;
- la figure 7 est une vue schématique en perspective d'un socle 1 module à ailes de protection ;
- la figure 8 est une vue de face du socle de la figure 7 monté dans le support de la figure 1 ;
- la figure 9 est une vue de face du support de la figure 1 sur lequel sont montés deux socles 1 module ;
- les figures 10 et 11 sont des vues de face d'un support équipé d'une entretoise monté horizontalement et verticalement ;

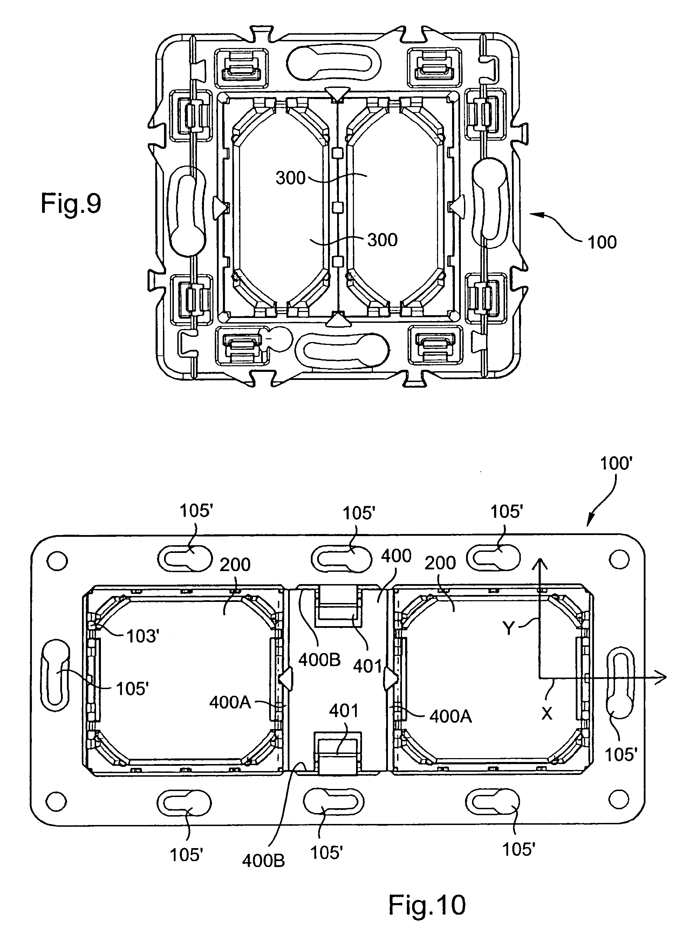

- les figures 10 à 17 sont des vues de face d'un support à moyens d'indexation selon différentes configurations de montage de socles de mécanisme d'appareillage électrique ; et

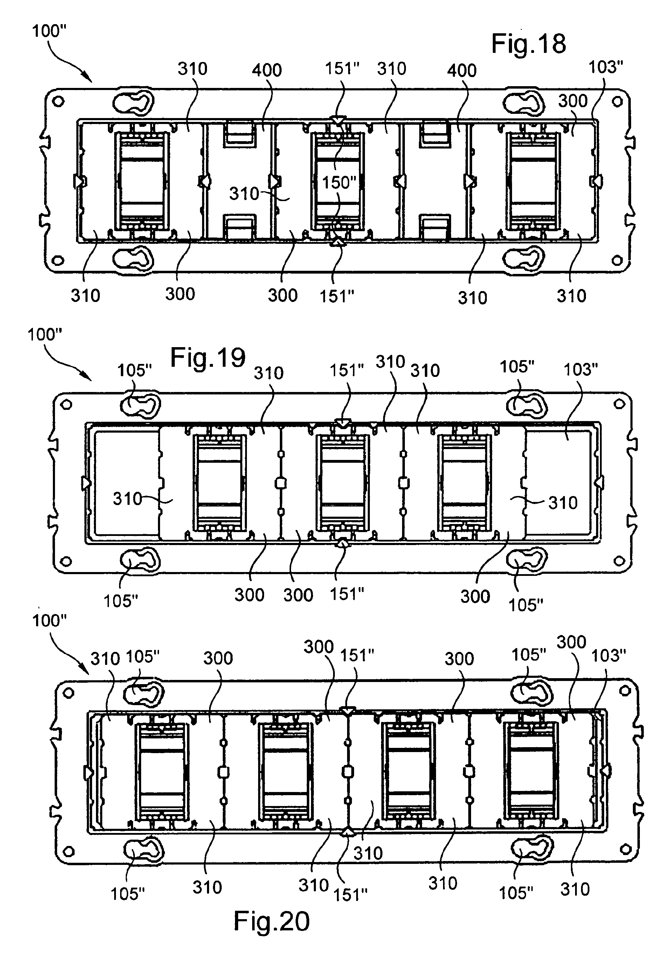

- les figures 18 à 20 sont des vues de face d'un autre support à moyens d'indexation selon différentes configurations de montage de socles de mécanisme d'appareillage électrique.

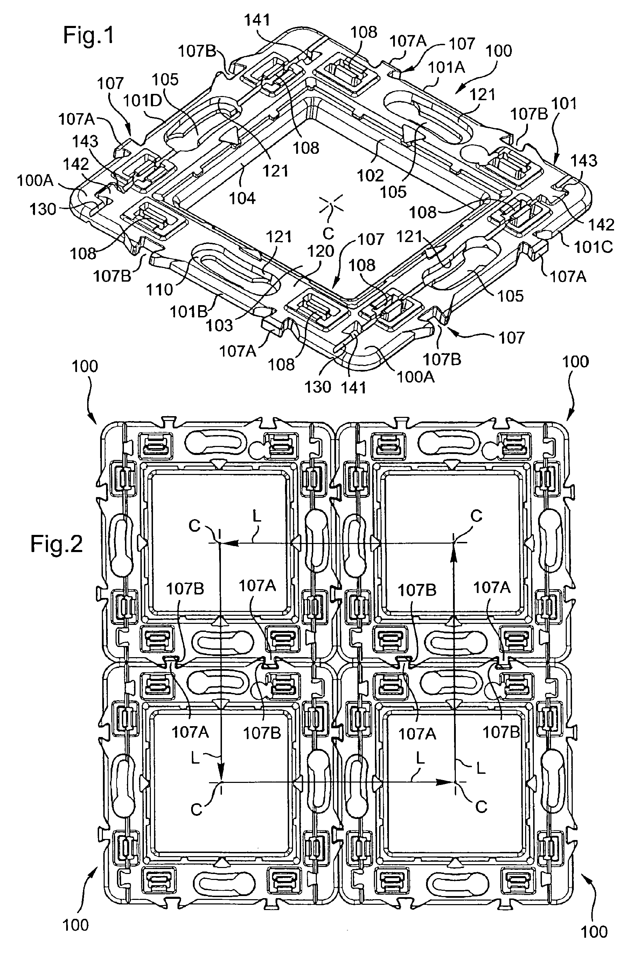

Sur la figure 1, on a représenté un support 100 d'appareillage électrique destiné à être fixé sur une boîte (non représentée) tel qu'une boîte à encastrer dans une paroi quelconque, par exemple, une paroi alvéolaire ou un boîtier à rapporter en saillie sur une telle paroi.

Le support 100 sert au montage à l'intérieur de la boîte ou du boîtier d'un ou plusieurs mécanismes d'appareillage, tels qu'un mécanisme d'interrupteur, de prise de courant, de prise de téléphone, de disjoncteur.

Il comprend un cadre 110 plat en matière métallique ici de forme carrée. Le cadre 110 est défini entre un bord périphérique extérieur 101 et un bord périphérique intérieur 102 qui délimite une ouverture centrale 103 également de forme carrée.

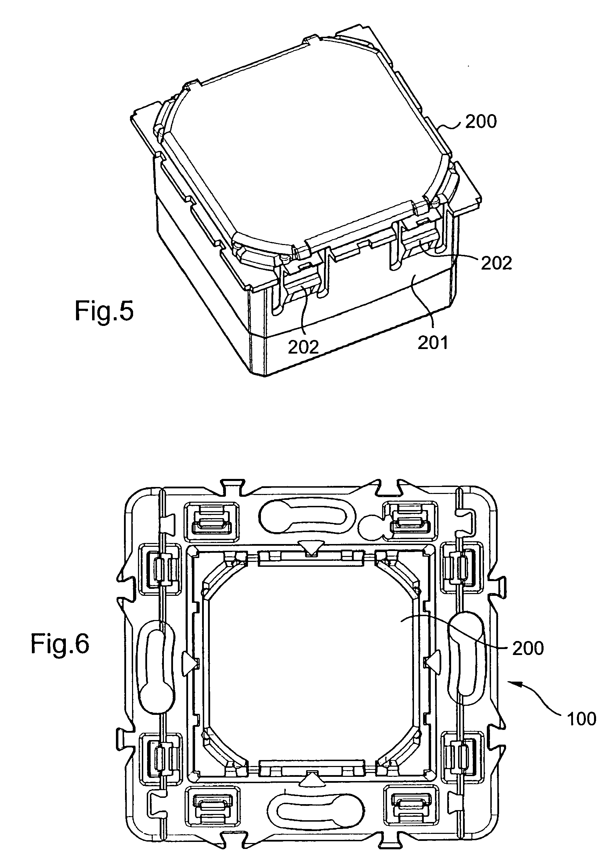

Comme le montrent plus particulièrement les figures 5 à 9, l'ouverture centrale 103 du support 100 est destinée à accueillir un ou plusieurs socles de mécanisme d'appareillage.

L'ouverture centrale 103 carrée du support 100 peut accueillir un socle deux modules 200 dont la façade de forme carrée remplit la surface de l'ouverture centrale 103, ou deux socles un module 300 dont chaque façade de forme rectangulaire remplit la moitié de la surface de l'ouverture centrale 103.

Pour le montage des socles 200, 300 de mécanisme d'appareillage, l'ouverture centrale 103 du support 100 est bordée sur ses quatre côtés de moyens de montage, ici des moyens d'encliquetage, qui comprennent une nervure d'accrochage 104 formant un bord tombant à partir de la face avant du support 100. Ainsi le sens de montage dudit socle sur le support n'impose pas l'orientation de ce dernier par rapport à l'horizontale ou la verticale de la paroi d'installation.

Sur cette nervure d'accrochage 104 sont destinées à s'accrocher des dents d'encliquetage 202, 302 prévues en saillie de deux faces opposées 201, 301 des socles 200, 300 de mécanisme d'appareillage.

Avantageusement, le cadre 110 en matière métallique du support 100 est surmoulé d'une peau 120 en matière synthétique isolante.

La peau 120 en matière synthétique isolante recouvre la majeure partie des faces avant et arrière du cadre 110 plat métallique. Elle recouvre également la tranche de ce cadre.

Le cadre 110 en matière métallique confère une grande rigidité au support 100 et la peau 120 en matière isolante confère à l'utilisateur un sentiment de sécurité électrique en formant une isolation électrique. L'association du cadre 110 plat métallique et de la peau 120 surmoulée sur ce cadre 110 permet d'obtenir un support 100 esthétique de faible épaisseur et de grande résistance mécanique.

Selon un mode de réalisation préférentiel du support 100, la matière isolante constituant la peau 120 est une matière plastique telle qu'un polymère chargé en fibres de verre ou un ABS (Acrylonitrile Butadiène Styrène).

Comme on peut le voir sur la figure 1, le support 100 comporte dans chacune de ses quatre branches des moyens d'assujettissement propres à permettre sa fixation à la boîte ou au boîtier. Ces moyens d'assujettissement comprennent un perçage 105, en forme de trou de serrure, qui s'étend globalement circulairement, en étant centré sur le centre C de l'ouverture centrale 103 du support 100. Chaque perçage 105 permet le passage du corps fileté d'une vis de fixation destiné à être vissé dans la boîte ou le boîtier non représenté.

On remarque, que la peau 120 forme autour de chaque perçage 105 une surépaisseur 121 et, qu'à cet endroit, le cadre 110 en matière métallique est apparent.

Par ailleurs, il est prévu dans chacune des quatre branches du support 100, de part et d'autre de chaque perçage 105, des moyens de clippage 108 d'une plaque de façade enjoliveur non représentée.

Comme le montrent plus particulièrement les figures 1 et 2, le support 100 comporte sur chacun des quatre côtés 101A, 101B, 101C, 101D de son bord périphérique extérieur 101 des moyens d'assemblage 107 à un autre support du même type.

Ici, avantageusement, les moyens d'assemblage 107 prévus sur les côtés du bord périphérique extérieur 101 du support 100, permettent la solidarisation dudit support à un autre support du même type pour former une seule pièce rigide à rapporter et à fixer sur une boîte.

Préférentiellement, lesdits moyens d'assemblage 107 prévus sur chaque côté 101A, 101 B, 101C, 101D du bord périphérique extérieur 101 comprennent en saillie de celui-ci un élément mâle 107A et un élément femelle 107B. Lesdits moyens d'assemblage 107 viennent de formation avec le support 100.

Plus particulièrement, ils comprennent sur chaque côté 101A, 101B, 101C, 101D du bord périphérique extérieur 101, un ergot 107A et, à distance de cet ergot 107A, en correspondance avec celui-ci, une encoche 107B de contour complémentaire. L'ergot 107A prévu sur chaque côté extérieur du support 100 est destiné à s'accrocher dans une encoche 107B prévue sur le côté extérieur correspondant d'un autre support du même type.

Comme le montre plus particulièrement la figure 2, ces moyens d'assemblage 107 identiques prévus sur tous les côtés du support 100 permettent avantageusement d'associer le support 100 dans tous les sens à un ou plusieurs autres supports 100 du même type. En effet, chaque support 100 peut être associé horizontalement ou verticalement à un autre support 100 de façon à former une rangée verticale ou horizontale ou même un carré de supports 100 comme cela est représenté sur la figure 2. Même si on pivote le support 100 par rapport à un autre support du même type, les moyens d'assemblage 107 du support pivoté restent positionnés correctement par rapport aux moyens d'assemblage du support qui n'a pas bougé pour coopérer avec eux aux fins de la solidarisation desdits supports entre eux.

L'association de supports 100 représentée sur la figure 2 est réalisée de telle sorte que l'écartement L entre les centres C des ouvertures centrales des supports 100 est de l'ordre de 71 millimètres.

Pour réaliser le support 100, on confectionne d'abord de manière classique le cadre 110 métallique puis on introduit le cadre 110 dans un moule et on ferme le moule de sorte que le cadre 110 est tenu dans celui-ci autour des perçages 105 puis on injecte dans le moule la matière synthétique constituant la peau 120 de sorte que celle-ci recouvre la totalité des éléments du cadre 110 métallique et forme par moulage les moyens d'assemblage 107. La peau 120 recouvre notamment les moyens de clippage 108 ainsi que la nervure d'accrochage 104. Lorsque le support 100 est sorti du moule, seules les parties du cadre nécessaires à sa tenue dans le moule sont laissées apparentes non recouvertes de la peau 120 en matière synthétique.

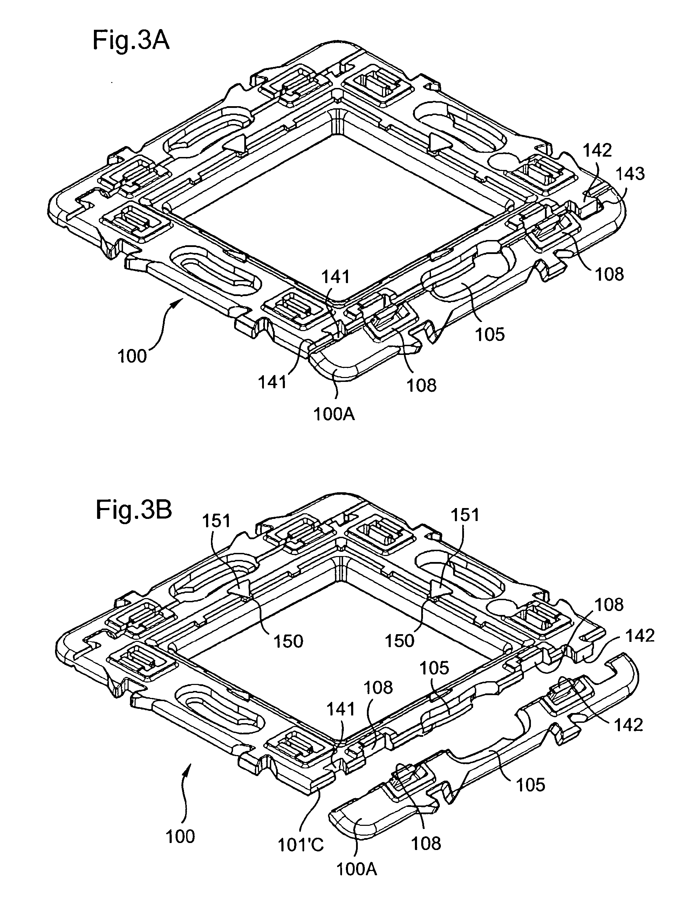

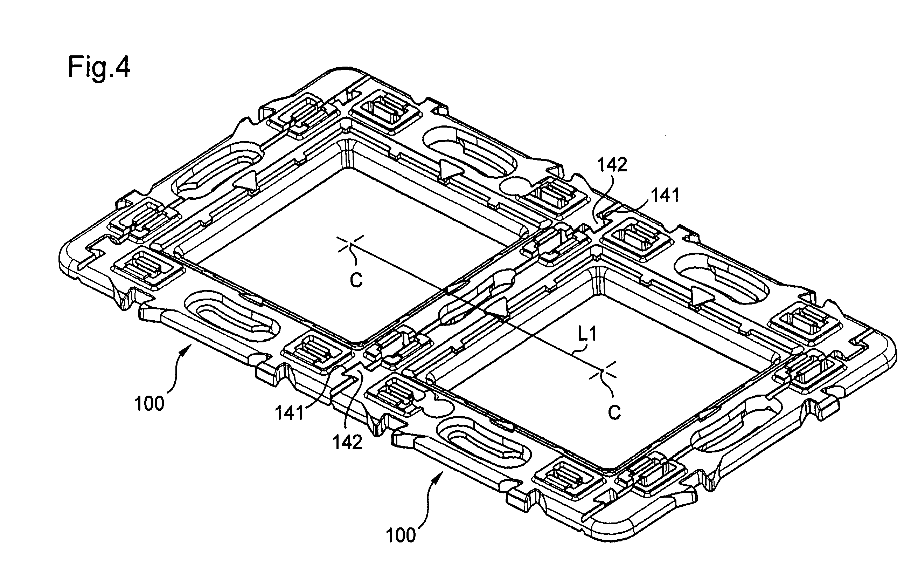

Comme le montrent plus particulièrement les figures 3, 3B et 4, le support 100 comporte sur deux branches parallèles opposées deux portions détachables 100A qui s'étendent chacune sur au moins une partie de la longueur de la branche concernée, ici, sur toute la longueur de la branche concernée du support 100.

Chaque portion détachable 101 est reliée d'un seul tenant à la branche concernée du support 100 par une ligne de cassure 130 de moindre résistance.

En outre, chaque branche concernée du support 100 comporte, d'une part, en position excentrée, localement en saillie de ladite ligne de cassure 130, un ergot 142 que ladite portion détachable 100A contourne par une encoche 143, et, d'autre part, à distance de cet ergot 142, en correspondance avec celui-ci une encoche 141 de contour complémentaire.

Ainsi, avantageusement s'il le souhaite, l'utilisateur peut casser une des lignes de cassure 130 pour détacher une portion détachable 100A, comme le montrent les figures 3A et 3B, afin de dégager l'ergot 142 et l'encoche 141 correspondantes et d'associer ce support 100 à un autre support 100 du même type dont la portion détachable 100A a également été détachée par cassure de la ligne de cassure correspondante.

Comme le montre la figure 3B lorsque la portion détachable 100A est détachée du support 100 les moyens d'assemblage 142, 141 que constituent l'ergot et l'encoche correspondantes font saillies du nouveau bord 101'C formé par la cassure de la ligne de cassure 130.

De cette manière, l'utilisateur peut associer deux supports 100 à un entraxe de 57 millimètres, c'est-à-dire que les centres C des ouvertures centrales 103 des support 100 sont distantes d'une longueur L1 égale à 57 millimètres.

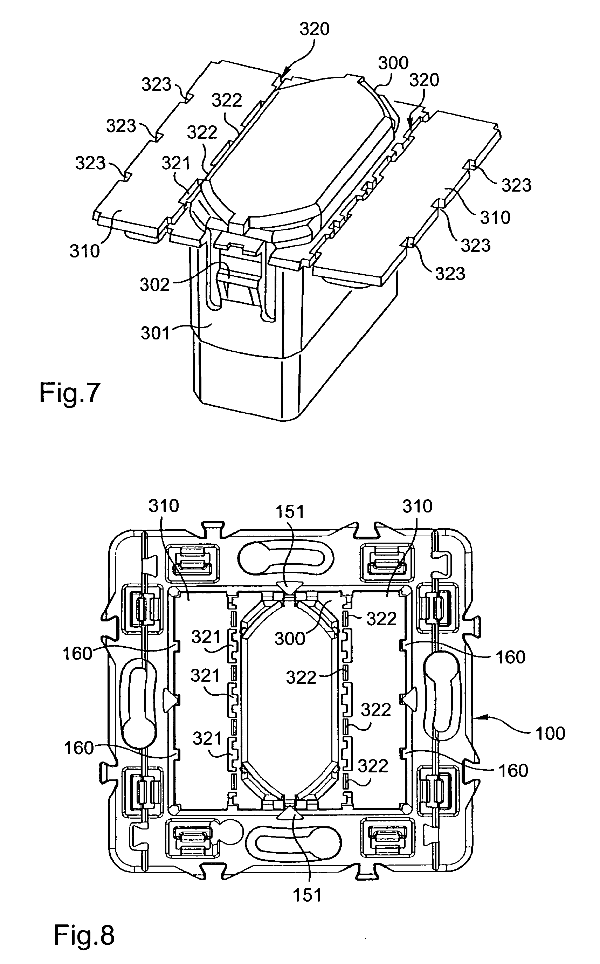

Sur les figures 7 et 8, on a représenté un socle 300 en matière isolante d'un mécanisme d'appareillage électrique destiné à être monté dans l'ouverture centrale 103 du support 100 d'appareillage électrique.

Ce socle 300 présente comme caractéristique remarquable le fait qu'il porte au moins une aile 310 qui s'étend en porte-à-faux à partir d'un bord longitudinal de celui-ci sensiblement dans le plan de la façade dudit socle et qui est destinée à obturer une partie de ladite ouverture centrale 103 dudit support 100 laissée libre après montage dudit socle 300 dans celle-ci.

En effet, ici, le socle 300 est un socle un module qui, lorsqu'il est monté à l'aide de ses dents d'encliquetage 302 dans l'ouverture centrale 103 du support 100 qui est de forme carrée, ne remplit que la moitié de la surface de cette ouverture.

Avantageusement, le socle 300 porte deux ailes 310 identiques sur deux bords longitudinaux parallèles qui permettent d'obturer les parties de l'ouverture centrale laissées libres de part et d'autre du socle 300 lorsque celui-ci a été monté sur le support 100 au centre de ladite ouverture centrale 103 (voir figure 8).

D'ailleurs, le centre de ladite ouverture centrale 103 est repéré à l'aide de pointes ou de flèches 151 qui surmontent des moyens d'indexation 150 prévus au centre de bords parallèles de ladite ouverture centrale 103 (voir figure 3B). Ces moyens d'indexation 150 sont ici des plots de forme carrée (visibles sur la figure 3B) formés par le surmoulage de la peau 120 adaptées à coopérer avec des crans correspondants de forme complémentaire prévus sur les bords du socle 300.

Lorsque le socle 300 représenté sur la figure 7 est monté dans l'ouverture centrale 103 du support 100, celle-ci est complètement obturée par les ailes 310 ainsi que par le socle 300 lui-même. Ces ailes 310 sont des ailes de protection qui permettent d'éviter que l'utilisateur ait la possibilité d'accéder, après montage du socle sur le support, à des zones de parties actives de l'appareillage électrique. Ces zones actives sont par exemple les zones de câblage du mécanisme d'appareillage.

Avantageusement, chaque aile 310 comporte sur ses bords extérieurs des crans ou encoches 323 coopérant avec des saillies complémentaires 160 prévues sur le bord de l'ouverture centrale 103 du support 100 et est reliée au socle 300 par une liaison sécable 320.

Chaque aile 310 est formée d'une seule pièce avec le socle 300 par moulage d'une matière plastique et chaque liaison sécable comprend des zones de moindre résistance constituées par une succession d'encoches 321 et de zones d'amincissement 322 formant des pointillés.

S'il le souhaite l'utilisateur peut donc à sa guise détacher une ou les deux ailes 310 du socle 300 en fonction de la grandeur de l'ouverture centrale du support qu'il utilise et du nombre de modules qu'il monte à l'intérieur de celle-ci.

En particulier, l'utilisateur peut détacher les deux ailes 310 du socle 300 pour retrouver un socle un module classique qu'il peut accoler à un autre socle 300 un module dans l'ouverture centrale du support 100 (voir figure 9).

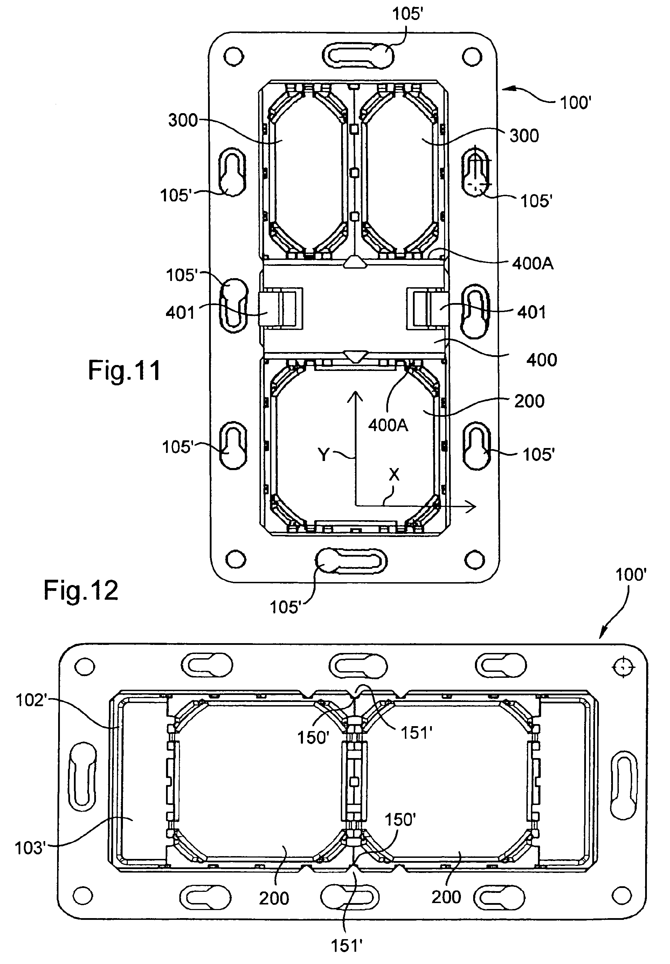

Sur les figures 10 et 11 on a représenté un support 100' d'appareillage électrique multipostes comprenant un cadre de forme générale rectangulaire pourvu d'une ouverture centrale 103' rectangulaire bordée sur ses quatre côtés de moyens de montage d'au moins deux socles 200, 300 de mécanisme d'appareillage électrique.

Avantageusement, le support 100' comporte également une entretoise 400 qui présente une forme rectangulaire et qui est destinée à être rapportée dans ladite ouverture centrale 103' rectangulaire de façon à s'étendre transversalement à l'axe longitudinal de celle-ci, cette entretoise 400 comportant sur deux bords longitudinaux 400A des moyens de montage des socle 200, 300 de mécanisme d'appareillage électrique.

Ainsi, avantageusement, comme le montrent les figures 10 et 11, grâce à cette entretoise 400, on peut utiliser le support 100' pour un montage horizontal selon l'axe X (voir figure 10) ou pour un montage vertical selon l'axe Y (voir figure 11).

Pour un montage horizontal du support 100', l'entretoise 400 ne sert pas au montage à proprement dit des socles 200 de mécanisme d'appareillage qui viennent s'accrocher par leur dents d'encliquetage 202 prévue sur deux faces opposées 201 sur les moyens de montage du support 100' lui-même, mais elle sert, comme le montre la figure 10, à obturer l'espace laissé libre de l'ouverture centrale 103' après montage desdits socles 200 et à positionner lesdits socles 200 à entraxe déterminé ici égal à 71 mm.

Par contre, lorsque le support 100' est orienté verticalement, comme le montre plus particulièrement la figure 11, seuls les bords transversaux de l'ouverture centrale 103' sont opérationnels pour le montage par encliquetage des socles 200, 300 (tournés d'un quart de tour par rapport à leur orientation sur le support horizontal) sur le support 100' et l'entretoise 400 présente les moyens de montage complémentaires à l'encliquetage des socles 200, 300 sur le support 100'.

Ainsi, on n'est pas obligé, lors d'un positionnement vertical du support 100', de rajouter des clips complémentaires sur les faces des socles 200,300 pour les monter sur le support et on utilise les dents d'encliquetage 202,302 d'origine de ces socles qui s'accrochent d'une part sur le support 100' et d'autre part sur l'entretoise 400.

Ici lesdits moyens de montage qui bordent l'ouverture centrale 103' rectangulaire du cadre du support 100' et chaque entretoise 400 sont des moyens d'encliquetage qui comprennent une nervure d'accrochage de dents d'encliquetage 202,302 prévues en saillie des faces 201,301 des socles 200, 300 de mécanisme d'appareillage (voir figures 5 et 7).

Chaque entretoise 400 comporte sur ses deux bords transversaux opposés 400B des autres moyens de montage 401 adaptés à coopérer avec lesdits moyens de montage qui bordent l'ouverture centrale 103' rectangulaire dudit cadre du support 100'.

lci, les autres moyens de montage 401 de l'entretoise 400 sont des moyens d'encliquetage, par exemple des dents d'encliquetage.

Chaque entretoise 400 est réalisée d'une seule pièce par moulage d'une matière synthétique.

Le support 100' comporte également dans chacune des quatre branches de son cadre des moyens d'assujettissement propres à permettre sa fixation à une boîte ou à un boîtier. Ici ces moyens d'assujettissement comprennent des perçages 105' pour le passage de vis de fixation, ces perçages 105' étant identiques aux perçages 105 du support 100 décrit précédemment.

Sur les figures 12 à 20 on a représenté différents supports 100', 100" du même type qui sont des supports d'appareillage multipostes comprenant un cadre de forme générale rectangulaire pourvu d'une ouverture centrale 103', 103" rectangulaire bordée sur ses quatre côtés de moyens de montage d'au moins deux socles 200, 300 de mécanisme d'appareillage et/ou d'accessoire tel que l'entretoise 400.

Avantageusement, chaque support 100', 100" comporte au centre des deux bords longitudinaux de son ouverture centrale 103', 103" des moyens d'indexation 150', 150" surmontés de pointes ou de flèches 151', 151" indicatrices (voir figures 12 et 18) repérant une position de montage des premiers desdits socles 200, 300 ou d'un accessoire tel que l'entretoise 400 à rapporter sur le support considéré.

En particulier, la position de montage repérée par lesdits moyens d'indexation 150', 150" est une position au centre de ladite ouverture centrale 103', 103" rectangulaire du support 100', 100".

Ici, lesdits moyens d'indexation comprennent en saillie des bords longitudinaux de l'ouverture centrale considérée, deux plots de forme carrée en regard l'un de l'autre aptes à coopérer avec des crans de forme complémentaire prévus sur le socle ou l'accessoire correspondant.

Bien entendu les plots peuvent avoir une tout autre forme telle qu'une forme arrondie, une forme en triangle ou une forme rectangulaire.

Selon une variante de réalisation non représentée on peut prévoir que les moyens d'indexation comprennent des encoches en regard l'une de l'autre aptes à coopérer avec des pointes ou des plots prévus en saillie du bord du socle ou de l'accessoire considéré.

Grâce à ces moyens d'indexation, l'utilisateur peut agencer comme il le souhaite les socles à un module ou à plusieurs modules dans l'ouverture centrale du support considéré pour adapter le montage des socles à la taille de l'ouverture de la plaque de façade enjoliveur à rapporter sur le support afin que les parties d'actionnement des mécanismes d'appareillage soient accessibles à l'utilisateur au travers de cette ouverture.

Les pointes ou flèches 151', 151" sont juste là pour indiquer à l'utilisateur l'emplacement des moyens d'indexation et lui faciliter la tâche de montage du mécanisme sur le support.

Par exemple, sur les figures 12 à 17, on a représenté un support 100' qui accepte soit 5 socles 300 un module ou encore des socles multi modules combinés avec des socles à un module.

Sur la figure 12, l'utilisateur utilise les moyens d'indexation 150' pour positionner de manière contiguë dans le centre de l'ouverture centrale 103' du support 100' deux socles 200 deux modules identiques.

Il positionne alors contre les moyens d'indexation 150' un premier socle 200 puis vient coller à ce premier socle 200 le deuxième socle 200.

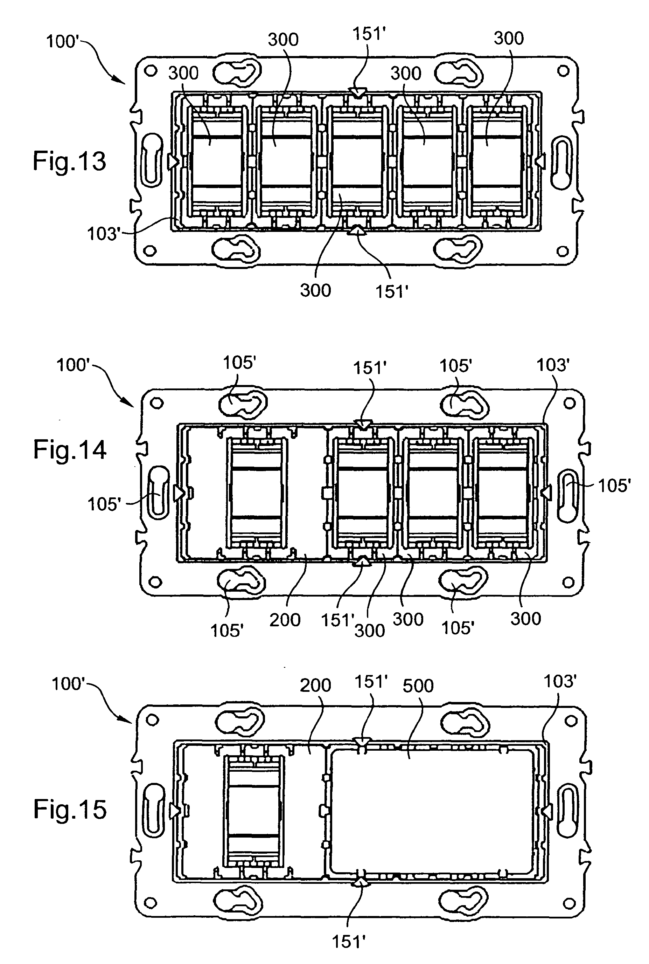

Sur la figure 13, on a représenté le support 100' garnit de cinq socles 300 un module. Pour réaliser ce montage, l'utilisateur monte tout d'abord un socle 300 au centre de l'ouverture centrale 103' en faisant coopérer les crans de ce socle 300 avec lesdits moyens d'indexation, puis vient coller contre ce socle 300 les autres socles 300 dans l'ouverture centrale 103'.

Sur la figure 14, on a représenté le socle 100' dans lequel est rapporté trois socles 300 un module et un socle 200 deux modules. Pour réaliser ce montage, l'utilisateur monte un socle 300 un module au centre de l'ouverture centrale 103' en faisant coopérer ses crans avec les moyens d'indexation puis vient coller à ce socle 300 un socle 200 deux modules et deux socles 300 un module.

Sur la figure 15, on a représenté le support 100' dans lequel est rapporté un socle 200 deux modules et un socle 500 trois modules. Pour réaliser ce montage, l'utilisateur utilise les moyens d'indexation repérés par les pointes ou les flèches 151' de façon à placer de manière décentrée le socle 500 trois modules dans l'ouverture centrale 103' puis il vient accoler à ce socle 500 trois modules le socle 200 deux modules.

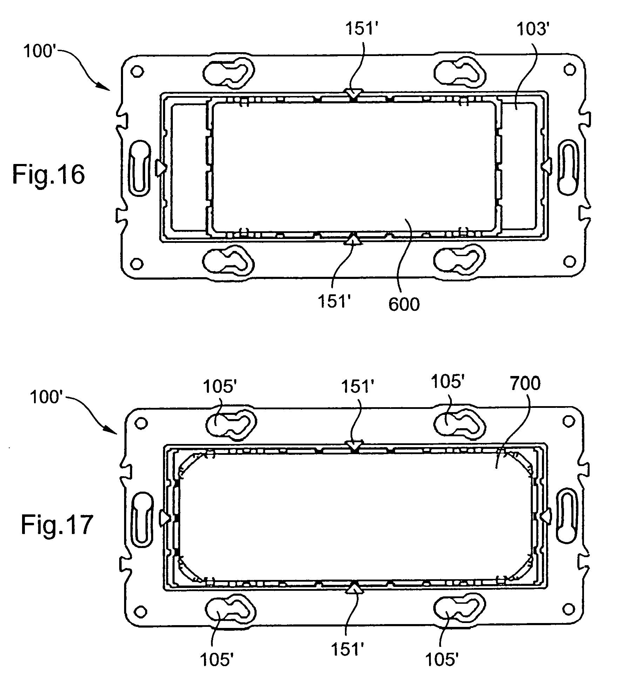

Sur la figure 16, on a représenté le support 100' dans lequel est monté au centre de son ouverture centrale 103' un socle 600 quatre modules positionné de manière centrée dans l'ouverture centrale 103' grâce à la coopération des crans de ce socle 600 avec les moyens d'indexation du support 100'.

Sur la figure 17, on a représenté le support 100' dans lequel est rapporté un socle 700 cinq modules qui couvre pratiquement la totalité de la surface de l'ouverture centrale 103'.

Sur la figure 18, on a représenté un autre support 100" du même type qui comprend une ouverture centrale 103" rectangulaire pouvant recevoir jusqu'à huit socles un module.

Le montage représenté sur la figure 18 comporte trois socles 300 un module équipés des ailes 310 séparés les uns des autres par des entretoises 400. Pour réaliser ce montage, l'utilisateur place chaque socle 300 dans chaque espace libre de l'ouverture centrale 103" délimité entre le support 100" et deux entretoises 400 montées préalablement sur ledit support 100" à des positions indexées sur la face arrière dudit support 100".

Sur la figure 19, on a représenté un autre montage sur le support 100" selon lequel les trois socles 300 un module équipés des ailes 310 sont accolés les uns aux autres. Pour réaliser ce montage l'utilisateur place tout d'abord un socle 300 un module au centre de l'ouverture centrale 103" grâce à la coopération des moyens d'indexation du support 100" avec les crans du socle 300 puis il vient accoler à ce socle 300, monté au centre de l'ouverture centrale 103" rectangulaire du support 100", les deux autres socles 300.

Sur la figure 20, on a représenté un autre montage utilisant le support 100" selon lequel il est prévu dans l'ouverture centrale 103" rectangulaire de ce support quatre socles 300 un module équipés des ailes 310.

Selon ce montage, les socles 300 sont accolés les uns aux autres, il suffit alors de monter le premier socle 300 de manière indexée au centre de l'ouverture centrale 103" du support 100" sur les plots constituant les moyens d'indexation et d'accoler les trois autres à celui-ci pour réaliser facilement le montage.

Avantageusement, grâce aux moyens d'indexation , l'utilisateur peut adapter le montage des socles dans le support 100',100", aux dimensions de l'ouverture de la plaque de façade rapportée sur ce support donnant l'aspect esthétique à l'appareillage électrique concerné.

La présente invention n'est nullement limitée aux modes de réalisation décrits et représentés, mais l'homme du métier saura y apporter toute variante conforme à son esprit.

## Revendications

1. Support (100) d'appareillage électrique comprenant un cadre plat de forme générale rectangulaire avec sur chacun de deux côtés opposés de son bord périphérique extérieur (101) des moyens d'assemblage (107) adaptés à solidariser ledit support à un autre support du même type pour former avec cet autre support une seule pièce rigide, **caractérisé en ce qu'**il comporte sur chacun des deux autres côtés opposés du bord périphérique du cadre des moyens d'assemblage (107) identiques auxdits moyens d'assemblage portés par lesdits premiers côtés opposés.

2. Support (100) selon la revendication 1, **caractérisé en ce que** lesdits moyens d'assemblage (107) prévu sur chaque côté du bord périphérique extérieur (101) comprennent en saillie de ce dernier un élément mâle (107A) et un élément femelle (107B).

3. Support (100) selon l'une des revendications 1 ou 2, **caractérisé en ce que** lesdits moyens d'assemblage (107) viennent de formation avec ledit support.

4. Support (100) selon l'une des revendications 1 à 3, **caractérisé en ce que** lesdits moyens d'assemblage prévu sur chaque côté du bord périphérique extérieur comprennent un ergot (107A) et, à distance de cet ergot, en correspondance avec celui-ci, une encoche (107B) de contour complémentaire.

5. Support (100) selon l'une des revendications 1 à 4, **caractérisé en ce qu'**il comporte dans chacune de ses quatre branches des moyens d'assujettissement propres à permettre sa fixation à une boîte.

6. Support (100) selon la revendication 5, **caractérisé en ce que** lesdits moyens d'assujettissement comprennent un perçage (105) pour le passage d'une vis de fixation.
